# EUROPEAN PATENT SPECIFICATION

(11) **EP 2 736 151 B1**
(45) Date of publication and mention of the grant of the patent: **26.06.2019**
(21) Application number: 13194362.3
(22) Date of filing: 26.11.2013
(51) Int. Cl.: H02K 9/10, B60K 1/02, B60K 11/02, H02K 16/00

(54) **Rotary electric machine apparatus**
Elektrische Rotationsmaschinenvorrichtung
Machine rotative électrique

(30) Priority: 26.11.2012 JP 2012257779
(43) Date of publication of application: 28.05.2014
(73) Proprietor: Mitsubishi Jidosha Kogyo Kabushiki Kaisha, Tokyo 108-8410 (JP); MITSUBISHI JIDOSHA ENGINEERING KABUSHIKI KAISHA, Okazaki-shi Aichi (JP)
(72) Inventor: Sakaguchi, Yoshihiro, Tokyo 108-8410 (JP); Ishida, Sakae, Tokyo 108-8410 (JP); Kagitani, Akihiro, Okazaki-shi, Aichi (JP); Ando, Toshihiko, Okazaki-shi, Aichi (JP)
(74) Representative: Regimbeau

(56) References cited:
- US-A- 3 800 913
- US-A1- 2010 202 909
- US-A1- 2012 111 543

## Description

### BACKGROUND

### 1. Technical Field

The present invention relates to a rotary electric machine apparatus including a cooling device for circulating a cooling medium through two rotary electric machines.

### 2. Related Art

A hybrid vehicle includes a generator for generating an electric power by being driven by an engine and a motor for driving the drive wheels using the electric power generated by the generator. When the motor consumes an electric power or the generator generates an electric power, heat is generated by the resistance of conductors of the motor and the generator. Therefore, the motor and the generator are cooled by a cooling device for circulating a cooling medium therethrough.

According to a cooling device of a hybrid vehicle disclosed in Patent Document 1, the cooling device is adapted to cool a motor and a generator. The cooling device includes a cooling path in which a heat exchanger, a motor cooling unit and a generator cooling unit are arranged in series. The generator cooling unit is disposed at the downstream side of the motor cooling unit and the upstream side of the heat exchanger. Cooling water is used as the cooling medium. The motor cooling unit is formed in a ring shape so as to surround the entire casing of the motor. Lubricant oil for cooling is contained in an interior of a casing of the generator. The lubricant oil is reserved in a lubricant oil reservoir provided at a bottom of the casing. The generator cooling unit is provided adjacent to the lubricant oil reservoir and is adapted to indirectly cool the generator by transferring the heat of the lubricant oil to the cooling water.

### Patent Document 1: JP-A-2011-213290

Meanwhile, in the case of including both a motor and a generator as in Patent Document 1, these are collectively referred to as a motor-generator or a rotary electric machine apparatus. The motor-generator is switched between a power-generation mode where the generator is mainly operated and a drive mode where the motor is mainly operated, depending on the operation conditions of a vehicle. When either of them is actively operated, a rotational speed difference or a temperature difference occurs. Due to these differences, there occurs a difference between a pressure in a motor housing and a pressure in a generator housing.

In order to cool the motor and the generator, respectively, cooling oil also serving as a lubricant is supplied into the motor housing and the generator housing by a single pump. At this time, when the difference between the pressures in respective housings becomes greater, there is a possibility that the cooling oil does not flow smoothly but is stagnant or flows backward. In this case, not only the motor and the generator are not cooled properly, but also the circulation of the cooling oil is hindered. And so, more cooling oil than necessary is accumulated in the housing or the deficiency of the cooling oil is caused. In order to solve these problems, it is considered to provide a pump independently to the motor and the generator or to provide a valve device for regulating a flow rate of the cooling oil to be distributed. However, in this case, the cost is expensive and associated devices are increased.

Publication US20120111543A1 discloses a machine according to the preamble of claim 1.

### SUMMARY OF THE INVENTION

The present invention provides a rotary electric machine apparatus including a cooling device which does not cause a pressure difference between two rotary electric machines, with a simple configuration.

According to one aspect of the present invention, a rotary electric machine apparatus includes a first rotary electric machine that includes a first rotor, a first stator and a first housing for containing the first rotor and the first stator, a second rotary electric machine that includes a second rotor, a second stator and a second housing for containing the second rotor and the second stator, a pump that supplies a cooling liquid to the first rotary electric machine and the second rotary electric machine, and a communication pipe that communicates a gas-phase in the first housing and a gas-phase in the second housing so that an internal pressures of the first housing and the second housing are balanced to each other.

In the above configuration, it is preferable that the first rotary electric machine includes a first protective plate to cover one end orifice of the communication pipe connected to the first housing and, the second rotary electric machine includes a second protective plate to cover the other end orifice of the communication pipe connected to the second housing.

It is also preferable that the first rotary electric machine includes a first breather for communicating the inside and outside of the first housing in a range surrounded by the first protective plate when the pressure difference between the inside and outside of the first housing exceeds a certain level and, the second rotary electric machine includes a second breather for communicating the inside and outside of the second housing in a range surrounded by the second protective plate when the pressure difference between the inside and outside of the second housing exceeds a certain level.

The first rotary electric machine may include a first lid which covers a first opening formed on the first housing and which is detachable from the first housing, and the second rotary electric machine may include a second lid which covers a second opening formed on the second housing and which is detachable from the second housing.

The cooling liquid discharged from the pump may be supplied in parallel to the first rotary electric machine and the second rotary electric machine through a coolant passage branched in the middle. In this configuration, the cooling liquid discharged from the first rotary electric machine is returned to the pump via a liquid reservoir provided at a lower portion of the second rotary electric machine.

A coolant passage for returning the cooling liquid discharged from the first rotary electric machine to the pump and a coolant passage for returning the cooling liquid discharged from the second rotary electric machine to the pump may be joined and then connected to the pump.

According to the rotary electric machine apparatus of the present invention, since the communication pipe is provided, the difference between the pressure in the first housing of the first rotary electric machine and the pressure in the second housing of the second rotary electric machine is eliminated. As the pressure difference is eliminated, flow rate variation or stagnation of the cooling liquid flowing toward the first rotary electric machine and the second rotary electric machine does not occur and therefore cooling performance becomes stable.

Further, since the first protective plate and second protective plate covering the orifices of the communication pipe are provided in the rotary electric machine apparatus, the droplets of the cooling liquid scattered by the rotation of each of the first rotor of the first rotary electric machine and the second rotor of the second rotary electric machine can be prevented from blocking the orifices of the communication pipe.

Furthermore, in a case where each of the first rotary electric machine and the second rotary electric machine includes the breather, these breathers are placed within a range surrounded by the first protective plate and the second protective plate and therefore it is possible to prevent the function of the breathers from being impaired by the scattered droplets of the cooling liquid.

In a case where the cooling liquid is supplied in parallel to the first rotary electric machine and the second rotary electric machine through the coolant passage branched in the middle, the rotary electric machine apparatus of the present invention includes the communication pipe and therefore it is easy to distribute the cooling liquid to each of the first rotary electric machine and the second rotary electric machine by a single pump without providing a complicated mechanism.

In a case where the cooling liquid discharged from the first rotary electric machine is returned to the pump via the liquid reservoir provided in the second rotary electric machine, the rotary electric machine apparatus of the present invention can circulate the cooling liquid on the average, regardless of the operating rate of the first rotary electric machine and the second rotary electric machine. Accordingly, not only the temperature of the cooling liquid becomes stable, but also the purity of the cooling liquid is easily averaged.

In a case where the first rotary electric machine include a first lid which covers a first opening formed on the first housing and which is detachable from the first housing and the second rotary electric machine may include a second lid which covers a second opening formed on the second housing and which is detachable from the second housing, a clogging of the communication pipe or the breather is easily fixable since the lid to which the communication pipe and the breathers are inserted is detachable from the housing.

### BRIEF DESCRIPTION OF THE DRAWINGS

Fig. 1 is a view schematically showing a rotary electric machine apparatus according to a first embodiment of the present invention.
Fig. 2 is a perspective view showing a gas-phase communication pipe and its surroundings of a rotary electric machine apparatus according to a second embodiment of the present invention.
Fig. 3 is a sectional view showing an end portion of the communication pipe and its surroundings, taken along a line F3-F3 in Fig. 2.
Fig. 4 is a perspective view showing an interior of a housing, as viewed from a direction indicated by an arrow F4 in Fig. 3.

### DESCRIPTION OF PREFERRED EMBODIMENT

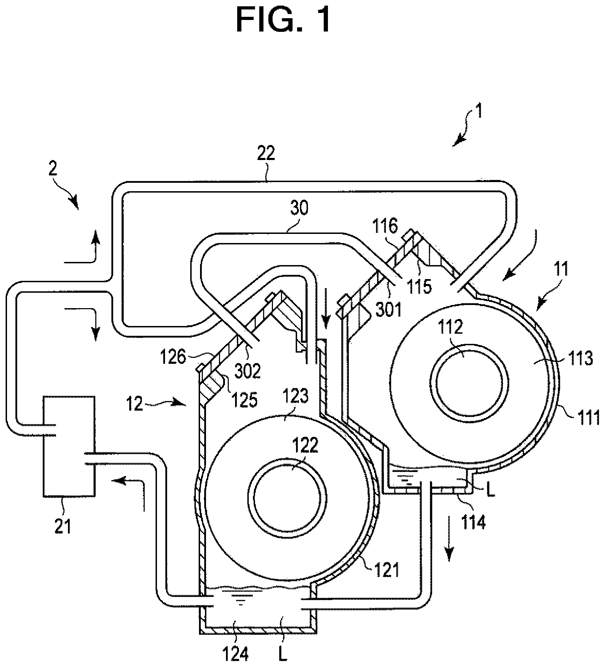

A rotary electric machine apparatus 1 according to a first embodiment of the present invention will be described with reference to Fig. 1. The rotary electric machine apparatus 1 shown in Fig. 1 is mounted on a hybrid vehicle and includes a cooling device 2 for removing the heat generated when electric current flows through a first rotary electric machine 11 and a second rotary electric machine 12. The rotary electric machine apparatus 1 according to the first embodiment includes the first rotary electric machine 11, the second rotary electric machine 12, a pump 21 and a communication pipe 30. The first rotary electric machine 11 mainly serves as a motor and the second rotary electric machine 12 mainly serves as a generator. Cooling liquid L is used as a cooling medium. As the cooling liquid L of the present embodiment, cooling oil also serving as a lubricant is used.

In the first rotary electric machine 11, a first rotor 112 and a first stator 113 are respectively contained in a first housing 111. In the second rotary electric machine 12, a second rotor 122 and a second stator 123 are respectively contained in a second housing 121. The pump 21 discharges the cooling liquid L and supplies the cooling liquid L to the first rotary electric machine 11 and the second rotary electric machine 12 through a coolant passage 22. The cooling liquid L is distributed through the coolant passage 22 branched in the middle and supplied to the first housing 111 and the second housing 121. That is, in the present embodiment, the cooling liquid L is supplied in parallel to the first rotary electric machine 11 and the second rotary electric machine 12.

The first housing 111 and the second housing 121 respectively include liquid reservoirs 114, 124 at the lowermost positions thereof. The cooling liquid L is supplied to each of the first rotary electric machine 11 and the second rotary electric machine 12 from the above so as to be in contact with the first rotor 112 and the second rotor 122 and is gathered in the liquid reservoirs 114, 124. The gathered cooling liquid L is collected in the pump 21. At this time, the cooling liquid L discharged from the liquid reservoir 114 of the first rotary electric machine 11 is returned to the pump 21 via the liquid reservoir 124 of the second rotary electric machine 12.

The communication pipe 30 communicates the gas-phase in the first housing 111 and the gas-phase in the second housing 121 so that the internal pressures of these housings are balanced. Opening portions 115, 125 are provided respectively at the upper portions of the first housing 111 and the second housing 121 and covered by lids 116, 126. The communication pipe 30 is mounted so as to pass through the lids 116, 126.

According to the rotary electric machine apparatus 1 configured as described above, while the first rotary electric machine 11 is operated, the first rotor 112 and the first stator 113 are warmed-up by resistance heating and therefore the gas in the first housing 111 is also warmed-up. Similarly, while the second rotary electric machine 12 is operated, the second rotor 122 and the second stator 123 are warmed-up by resistance heating and therefore the gas in the second housing 121 is also warmed up. In a case where the first housing 111 and the second housing 121 are provided independently of each other, there occurs a difference between the internal pressure of these housings 111, 121.

In the present embodiment, since the gas-phase in the first housing 111 and the gas-phase in the second housing 121 are communicated with each other by the communication pipe 30, the pressure difference does not occur. Accordingly, when the cooling liquid L is sent to the first housing 111 and the second housing 121 by the pump 21, difference in the supply amount due to the pressure difference does not occur. Further, difference in the amount of the cooling liquid L collected from the first housing 111 and the second housing 121 does not occur.

Further, in the first embodiment, the cooling liquid L is collected from the liquid reservoir 114 of the first rotary electric machine 11 via the liquid reservoir 124 of the second rotary electric machine 12. The liquid reservoir 114 of the first rotary electric machine 11 is disposed at a position higher than the liquid reservoir 124 of the second rotary electric machine 12. Since the first housing 111 and the second housing 121 are connected to each other by the communication pipe 30, the cooling liquid L flows from the first rotary electric machine 11 to the second rotary electric machine 12, regardless of the operation conditions of the first rotary electric machine 11 and the second rotary electric machine 12. Accordingly, the pump 21 collects the cooling liquid L from the liquid reservoir 124 of the second rotary electric machine 12 whereby the cooling liquid L is smoothly circulated without being stagnant in the first rotary electric machine 11 and the second rotary electric machine 12.

In the first embodiment, the internal pressure in the first housing 111 and the internal pressure in the second housing 121 are substantially in a balanced state by the communication pipe 30. In other words, there is no possibility that the cooling liquid L flows backward from the higher internal pressure side to the lower internal pressure side, between the first rotary electric machine 11 and the second rotary electric machine 12. The cooling liquid L discharged from the liquid reservoir 114 of the first rotary electric machine 11 may be joined to the cooling liquid L discharged from the liquid reservoir 124 of the second rotary electric machine 12 and then collected in the pump 21.

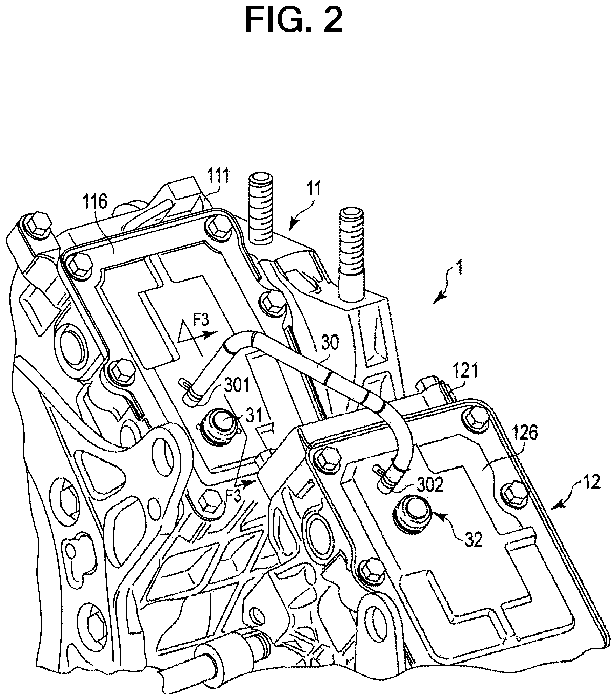

A rotary electric machine apparatus 1 according to a second embodiment of the present invention will be described with reference to Fig. 2 to Fig. 4. The components having the same function as those of the rotary electric machine apparatus 1 of the first embodiment are denoted by the same reference numerals and a description thereof considers the description of the first embodiment. Further, the entire configuration of the rotary electric machine apparatus 1 considers the first embodiment and Fig. 1.

As shown in Fig. 2 to Fig. 4, the rotary electric machine apparatus 1 of the second embodiment is different from the rotary electric machine apparatus 1 of the first embodiment in the configurations of the communication pipe 30 and its surroundings. As shown in Fig. 2, the rotary electric machine apparatus 1 of the second embodiment includes a first breather 31 and a second breather 32, respectively, in the vicinity of the communication pipe 30 connected to the lids 116, 126. In a case where the pressure difference between the inside and outside of the first housing 111 of the first rotary electric machine 11 exceeds a certain level, the first breather 31 communicates the inside and outside of the first housing 111. In a case where the pressure difference between the inside and outside of the second housing 121 of the second rotary electric machine 12 exceeds a certain level, the second breather 32 communicates the inside and outside of the second housing 121. Meanwhile, since the first housing 111 and the second housing 121 are connected to each other so that the internal pressures of the housings 111, 121 are balanced by the communication pipe 30, only one of the first breather 31 and the second breather 32 may be provided.

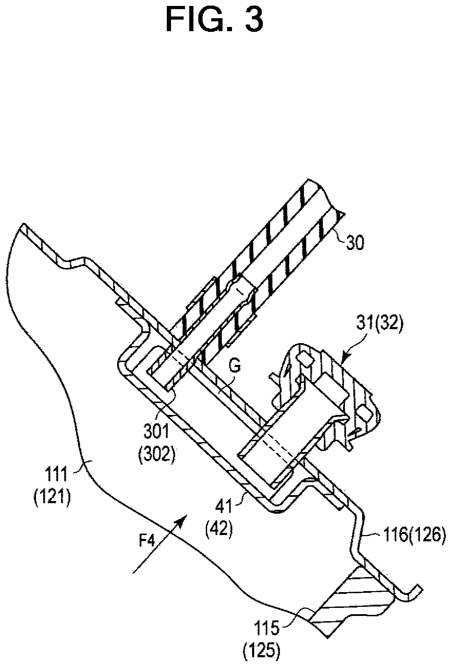

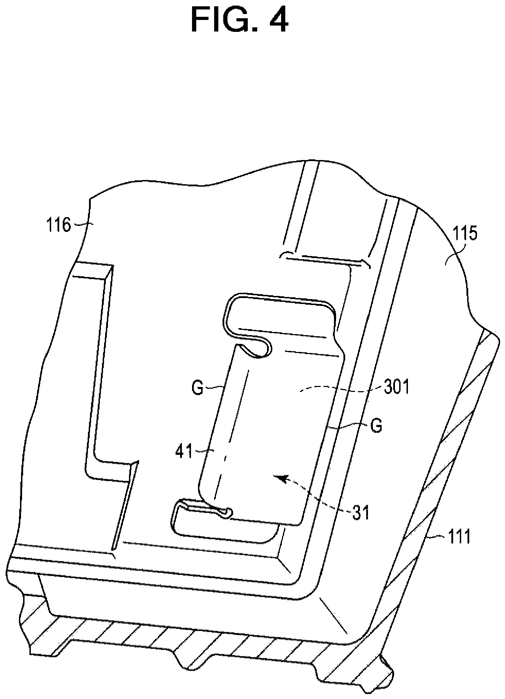

As shown in Fig. 3, the first rotary electric machine 11 includes a first protective plate 41 to cover an orifice 301 of the communication pipe 30 inside the first housing 111. The first protective plate 41 is disposed along a plane across a direction in which the orifice 301 of the communication pipe 30 is opened to the inside of the first housing 111. As shown in Fig. 4, the first protective plate 41 is provided at its periphery with a gap G for circulating the gas (air in the present embodiment) in the first housing without resistance. The first protective plate 41 also surrounds an end portion of the first breather 31 disposed in the vicinity of the communication pipe 30, as shown in Fig. 3.

Further, in the second embodiment, an end portion of the communication pipe 30 connected to the lid 126 of the second housing 121 of the second rotary electric machine 12 and the second breather 32 mounted to the second housing 121 are also configured in the same way as Fig. 3. In other words, the second rotary electric machine 12 includes a second protective plate 42 to cover an orifice 302 of the communication pipe 30 inside the second housing 121. The second protective plate 42 is disposed along a plane across a direction in which the orifice 302 of the communication pipe 30 is opened to the inside of the second housing 121. The second protective plate 42 also surrounds an end portion of the second breather 32 disposed in the vicinity of the orifice 302 of the communication pipe 30 connected to the second housing 121. The reference numerals of these configurations are indicated by parentheses in Fig. 3.

According to the rotary electric machine apparatus 1 of the second embodiment configured as described above, since the orifices 301, 302 of the communication pipe 30 are covered with the first protective plate 41 and the second protective plate 42, the cooling liquid L scattered by the first rotor 112 of the first rotary electric machine 11 and the second rotor 122 of the second rotary electric machine 12 can be prevented from blocking the orifices 301, 302 of the communication pipe 30 or end portions of the first breather 31 and the second breather 32.

In the first embodiment, the lid 116 of the first housing 111 and the lid 126 of the second housing 121 are arranged to be inclined substantially at the same angle, as shown in Fig. 1. The angles of the lids 116, 126 may be set so that the lids 116, 126 are easily detached for maintenance of the first rotary electric machine 11 and the second rotary electric machine 12. Alternatively, the angles of the lids 116, 126 may be positioned in relation to the rotation tangential direction of the rotors 112, 122.

## Claims

1. A rotary electric machine apparatus (1) comprising:
a first rotary electric machine (11) that includes a first rotor (112), a first stator (113) and a first housing (111) for containing the first rotor and the first stator;
a second rotary electric machine (12) that includes a second rotor (122), a second stator (123) and a second housing (121) for containing the second rotor and the second stator;
a pump (21) that supplies a cooling liquid (L) to the first rotary electric machine and the second rotary electric machine;
**characterised in that** it further comprises
a communication pipe (30) that communicates a gas-phase in the first housing and a gas-phase in the second housing so that the internal pressures of the first housing and the second housing are balanced to each other.

2. The rotary electric machine apparatus according to claim 1, wherein the first rotary electric machine includes a first protective plate (41) to cover one end orifice (301) of the communication pipe connected to the first housing and, the second rotary electric machine includes a second protective plate (42) to cover the other end orifice (302) of the communication pipe connected to the second housing.

3. The rotary electric machine apparatus according to claim 2, wherein the first rotary electric machine includes a first breather (31) for communicating the inside and outside of the first housing in a range surrounded by the first protective plate when the pressure difference between the inside and outside of the first housing exceeds a certain level and, the second rotary electric machine includes a second breather (32) for communicating the inside and outside of the second housing in a range surrounded by the second protective plate when the pressure difference between the inside and outside of the second housing exceeds a certain level.

4. The rotary electric machine apparatus according to claim 3, wherein the first rotary electric machine includes a first lid (116) which covers a first opening formed on the first housing and which is detachable from the first housing,
the second rotary electric machine includes a second lid (126) which covers a second opening formed on the second housing and which is detachable from the second housing.

5. The rotary electric machine apparatus according to any one of claims 1 to 4, wherein the cooling liquid discharged from the pump is supplied in parallel to the first rotary electric machine and the second rotary electric machine through a coolant passage (22) branched in the middle.

6. The rotary electric machine apparatus according to claim 5, wherein the cooling liquid discharged from the first rotary electric machine is returned to the pump via a liquid reservoir (124) provided at a lower portion of the second rotary electric machine.

7. The rotary electric machine apparatus according to claim 5, wherein a coolant passage for returning the cooling liquid discharged from the first rotary electric machine to the pump and a coolant passage for returning the cooling liquid discharged from the second rotary electric machine to the pump are joined and then connected to the pump.

## Patentansprüche

1. Rotierende elektrische Maschinenvorrichtung (1), aufweisend:
eine erste rotierende elektrische Maschine (11), umfassend einen ersten Rotor (112), einen ersten Stator (113) und ein erstes Gehäuse (111) zum Aufnehmen des ersten Rotors und des ersten Stators;
eine zweite rotierende elektrische Maschine (12), umfassend einen zweiten Rotor (122), einen zweiten Stator (123) und ein zweites Gehäuse (121) zum Aufnehmen des zweiten Rotors und des zweiten Stators;
eine Pumpe (21), die eine Kühlflüssigkeit (L) der ersten rotierenden elektrischen Maschine und der zweiten rotierenden elektrischen Maschine zuführt;
**dadurch gekennzeichnet, dass** die rotierende elektrische Maschinenvorrichtung ferner umfasst:
eine Verbindungsleitung (30), die eine Gasphase im ersten Gehäuse und eine Gasphase im zweiten Gehäuse derart miteinander verbindet, dass die Innendrücke des ersten Gehäuses und des zweiten Gehäuses zueinander ausgeglichen sind.

2. Rotierende elektrische Maschinenvorrichtung nach Anspruch 1, wobei die erste rotierende elektrische Maschine eine erste Schutzplatte (41) umfasst, um eine Endöffnung (301) des Verbindungsrohrs abzudecken, das mit dem ersten Gehäuse verbunden ist, und die zweite rotierende elektrische Maschine eine zweite Schutzplatte (42) umfasst, um eine Endöffnung (302) des Verbindungsrohrs abzudecken, das mit dem zweiten Gehäuse verbunden ist.

3. Rotierende elektrische Maschinenvorrichtung nach Anspruch 2, wobei die erste rotierende elektrische Maschine eine erste Entlüftungseinrichtung (31) aufweist, um die Innenseite und Außenseite des ersten Gehäuses in einem von der ersten Schutzplatte umgebenen Bereich zu verbinden, wenn die Druckdifferenz zwischen der Innenseite und der Außenseite des ersten Gehäuses einen bestimmten Pegel überschreitet, und die zweite rotierende elektrische Maschine eine zweite Entlüftungseinrichtung (32) aufweist, um die Innenseite und Außenseite des zweiten Gehäuses in einem von der zweiten Schutzplatte umgebenen Bereich zu verbinden, wenn die Druckdifferenz zwischen der Innenseite und der Außenseite des zweiten Gehäuses einen bestimmten Pegel überschreitet.

4. Rotierende elektrische Maschinenvorrichtung nach Anspruch 3, wobei die erste rotierende elektrische Maschine einen ersten Deckel (116) umfasst, der eine am ersten Gehäuse ausgebildete erste Öffnung abdeckt und der vom ersten Gehäuse abnehmbar ist,
die zweite rotierende elektrische Maschine einen zweiten Deckel (126) umfasst, der eine am zweiten Gehäuse ausgebildete zweite Öffnung abdeckt und der vom zweiten Gehäuse abnehmbar ist.

5. Rotierende elektrische Maschinenvorrichtung nach einem der Ansprüche 1 bis 4, wobei die von der Pumpe abgegebene Kühlflüssigkeit durch einen in der Mitte verzweigten Kühlmittelkanal (22) parallel zur ersten rotierenden elektrischen Maschine und zweiten rotierenden elektrischen Maschine zugeführt wird.

6. Rotierende elektrische Maschinenvorrichtung nach Anspruch 5, wobei die von der ersten rotierenden elektrischen Maschine abgegebene Kühlflüssigkeit über einen Flüssigkeitsspeicher (124), der an einem unteren Abschnitt der zweiten rotierenden elektrischen Maschine vorgesehen ist, zur Pumpe zurückgeführt wird.

7. Rotierende elektrische Maschinenvorrichtung nach Anspruch 5, wobei ein Kühlmittelkanal zum Rückführen der von der ersten rotierenden elektrischen Maschine abgegebenen Kühlflüssigkeit zur Pumpe und ein Kühlmittelkanal zum Rückführen der Kühlflüssigkeit, die von der zweiten rotierenden elektrischen Maschine abgegeben worden ist, zusammengeführt und dann an die Pumpe angeschlossen sind.

## Revendications

1. Appareil à machines électriques rotatives (1) comprenant :
une première machine électrique rotative (11) qui comprend un premier rotor (112), un premier stator (113) et un premier boîtier (111) pour contenir le premier rotor et le premier stator ;
une seconde machine électrique rotative (12) qui comprend un second rotor (122), un second stator (123) et un second boîtier (121) pour contenir le second rotor et le second stator ;
une pompe (21) qui fournit un liquide de refroidissement (L) à la première machine électrique rotative et à la seconde machine électrique rotative ;
**caractérisé en ce qu'**il comprend en outre :
un tuyau de communication (30) qui fait communiquer une phase gazeuse dans le premier boîtier et une phase gazeuse dans le second boîtier de sorte que les pressions internes du premier boîtier et du second boîtier sont équilibrées l'une par rapport à l'autre.

2. Appareil à machines électriques rotatives selon la revendication 1, dans lequel la première machine électrique rotative comprend une première plaque de protection (41) pour recouvrir un orifice d'extrémité (301) du tuyau de communication raccordé au premier boîtier, et la seconde machine électrique rotative comprend une seconde plaque de protection (42) pour recouvrir l'autre orifice d'extrémité (302) du tuyau de raccordement raccordé au second boîtier.

3. Appareil à machines électriques rotatives selon la revendication 2, dans lequel la première machine électrique rotative comprend un premier reniflard (31) pour faire communiquer l'intérieur et l'extérieur du premier boîtier dans une plage entourée par la première plaque de protection lorsque la différence de pression entre l'intérieur et l'extérieur du premier boîtier dépasse un certain niveau et, la seconde machine électrique rotative comprend un second reniflard (32) pour faire communiquer l'intérieur et l'extérieur du second boîtier dans une plage entourée par la seconde plaque de protection lorsque la différence de pression entre l'intérieur et l'extérieur du second boîtier dépasse un certain niveau.

4. Appareil à machines électriques rotatives selon la revendication 3, dans lequel la première machine électrique rotative comprend un premier couvercle (116) qui recouvre une première ouverture formée sur le premier boîtier et qui peut être détaché du premier boîtier,
la seconde machine électrique rotative comprend un second couvercle (126) qui recouvre une seconde ouverture formée sur le second boîtier et qui peut être détaché du second boîtier.

5. Appareil à machines électriques rotatives selon l'une quelconque des revendications 1 à 4, dans lequel le liquide de refroidissement déchargé de la pompe est fourni parallèlement à la première machine électrique rotative et à la seconde machine électrique rotative par un passage de réfrigérant (22) bifurqué au milieu.

6. Appareil à machines électriques rotatives selon la revendication 5, dans lequel le liquide de refroidissement déchargé de la première machine électrique rotative est ramené à la pompe via un réservoir de liquide (124) prévu au niveau d'une partie inférieure de la seconde machine électrique rotative.

7. Appareil à machines électriques rotatives selon la revendication 5, dans lequel un passage de réfrigérant pour ramener le liquide de refroidissement déchargé par la première machine électrique rotative, à la pompe et un passage de réfrigérant pour ramener le liquide de refroidissement déchargé par la seconde machine électrique rotative, à la pompe, sont assemblés et ensuite raccordés à la pompe.
